# FASCICULE DE BREVET EUROPEEN

(11) **EP 0 773 499 B1**
(45) Date de publication et mention de la délivrance du brevet: **22.08.2001**
(21) Numéro de dépôt: 96402348.5
(22) Date de dépôt: 05.11.1996
(51) Int. Cl.: G06F 7/52, G06F 1/03, G01S 1/04

(54) **Multiplieur rapide pour multiplier un signal numérique par un signal périodique**
Schneller Multiplizierer zur Multiplikation eines digitalen Signals mit einem periodischen Signal
Fastmultiplier for multiplying a digital signal to a periodic signal

(30) Priorité: 10.11.1995 FR 9513346
(43) Date de publication de la demande: 14.05.1997
(73) Titulaire: THALES AVIONICS S.A., 78141 Vélizy Villacoublay Cédex (FR)
(72) Inventeur: Renard, Alain, 94117 Arceuil Cedex, (FR)
(74) Mandataire: Guérin, Michel

(56) Documents cités:
- EP-A- 0 635 728
- US-A- 4 652 832
- US-A- 5 293 170
- PROCEEDINGS OF THE INTERNATIONAL SYMPOSIUM ON CIRCUITS AND SYSTEMS, SAN DIEGO, 10-13 MAY, 1992, vol. 3 OF 6, 10 Mai 1992, INSTITUTE OF ELECTRICAL AND ELECTRONICS ENGINEERS, pages 1348-1351, XP000338199 HAWLEY R ET AL: "A SILICON COMPILER FOR HIGH-SPEED CMOS MULTIRATE FIR DIGITAL FILTERS"
- IEEE JOURNAL OF SOLID-STATE CIRCUITS, vol. 30, no. 3, Mars 1995, NEW YORK US, pages 193-200, XP000502804 L. TAN ET AL.: "A 200 MHz Quadrature Digital Synthesizer/Mixer in 0.8 um CMOS"

## Description

L'invention concerne les multiplieurs numériques permettant de multiplier un premier signal numérique par des échantillons numériques d'une forme d'onde périodique, dont la variation sera dans le cas général de type sinusoïdal.

Les explications sur la présente invention seront données à propos d'une application précise, dans un récepteur de localisation par signaux de satellites GPS ("Global Positioning System") ou GLONASS ("Global Orbiting Navigation Satellite System"), mais on comprendra que le procédé de multiplication rapide proposé ici, et le multiplieur qui met en oeuvre ce procédé sont applicables à d'autres situations dans lesquelles on veut multiplier un signal numérique par des échantillons numériques d'un signal périodique.

Les récepteurs GPS ou GLONASS sont des appareils qui peuvent recevoir des signaux radiofréquence de plusieurs satellites d'une constellation de satellites en orbite autour de la terre, et qui permettent de calculer, à partir de ces signaux, la position exacte du récepteur, et éventuellement sa vitesse ainsi que l'heure absolue.

Dans les systèmes GPS ou GLONASS, les signaux radiofréquence sont constitués par une porteuse à fréquence fixe modulée en phase par un code pseudo-aléatoire binaire et par d'autres données numériques. Les puissances d'émission des satellites sont très faibles, et le code pseudo-aléatoire sert à améliorer la détection du signal dans un bruit de niveau beaucoup plus fort que le signal. A la réception, on corrèle le signal reçu, porteur du code pseudo-aléatoire, avec un code identique produit localement dans le récepteur.

Dans les récepteurs conçus récemment, le traitement de signal pour effectuer cette corrélation est entièrement numérique. On numérise donc le signal reçu du satellite, après avoir transposé sa fréquence porteuse à une valeur suffisamment basse pour que cette numérisation soit possible. Puis on effectue la corrélation.

Or la corrélation nécessite, pour tenir compte de phénomènes tels que l'effet Doppler d'une part, et la durée de propagation du signal dans l'atmosphère d'autre part, une boucle d'asservissement de phase et de fréquence. Cette boucle fait partie du circuit de traitement numérique de signal.

Dans la boucle d'asservissement, le signal numérisé peut encore subir une transposition de fréquence sous forme purement numérique, c'est-à-dire qu'on multiplie le signal (représenté par des échantillons réguliers codés sur quelques bits) par une forme d'onde (numérisée) sinusoïdale. Le résultat de la multiplication est un signal numérique à porteuse transposée, qui transporte encore la modulation initiale par le code pseudo-aléatoire; c'est ce signal qui va subir une corrélation avec un code pseudo-aléatoire identique mais engendré par un générateur local.

Dans la boucle d'asservissement numérique, on ne dispose pas en général directement d'un signal sinusoïdal numérique. Pour l'obtenir, on utilise un oscillateur à commande numérique de phase fournissant une phase numérique périodique Φ variant en dent de scie linéaire entre 0 et 2π radians.

Pour transformer cette dent de scie numérique en signal sinusoïdal, on utilise en principe une table de sinus ou de cosinus (en général on a besoin des deux pour avoir des signaux en quadrature de phase). Une telle table est constituée par une mémoire morte qui, à chacune des ses adresses, contient justement le sinus (ou le cosinus pour une table de cosinus) de la valeur numérique de cette adresse. La phase Φ est appliquée comme adresse, sur 4 bits par exemple, de sorte que la mémoire fournit sinΦ lorsqu'elle reçoit une adresse Φ.

Le signal numérique sinusoïdal sinΦ est alors multiplié, dans un multiplieur binaire classique, au signal numérisé issu du satellite.

Une technique équivalente est décrite dans la publication IEEE Journal of Solid-State Circuits, N°3, 30 Mars 1995, pages 193-200.

Cette solution rencontre des limites physiques lorsque la cadence de calcul des résultats est élevée. Le multiplieur comme les mémoires mortes sont des facteurs de ralentissement. D'autre part ce sont des éléments de circuit coûteux, car encombrants sur une puce de circuit intégré si le nombre de bits du signal numérique est élevé.

L'invention propose, pour éviter cette limitation, un procédé de multiplication original, et une nouvelle structure de multiplieur correspondant, pour multiplier un premier signal numérique par une forme d'onde périodique numérisée.

L'invention part de l'observation que dans des applications telles que mentionnées ci-dessus le résultat de la multiplication peut être défini à un coefficient K près : le véritable but de la multiplication est la transposition de fréquence, ou la modulation d'un signal numérique par une forme d'onde; dans ce cas, la multiplication peut être faite à un coefficient près pourvu que ce coefficient soit constant, dans la limite de la précision désirée, au cours des multiplications successives effectuées.

Le procédé selon l'invention est défini dans la revendication 1. Dans le cas particulier d'une forme d'onde sinusoïdale, ce procédé consiste à utiliser une phase numérique Φ variant périodiquement en dent de scie, et à appliquer cette phase à l'entrée d'un décodeur utilisant comme fonction de décodage un tableau de N valeurs approchées entières Ai de N nombres Ksin2iπ/N, i étant un indice de 0 à N-1, et K étant un nombre quelconque identique pour tous les indices i, les valeurs entières approchées Ai étant des sommes algébriques d'une ou plusieurs puissances entières positives de 2 affectées d'un signe. Et la multiplication d'un signal numérique SN par une forme d'onde sinusoïdale consiste alors simplement, pour chaque indice i correspondant à une phase 2iπ/N, à multiplier le signal SN par les diverses puissances de 2 qui composent le nombre Ai, sous la commande du décodeur, et à effectuer les sommes algébriques des signaux ainsi multipliés pour composer une valeur numérique qui est le produit de SN par la valeur approchée Ai. Les sommes algébriques Ai impliquent, au moins pour certaines valeurs de i, une somme de plusieurs puissances de deux différentes.

La multiplication par une puissance de deux avant une addition consiste pour l'essentiel à décaler d'un ou plusieurs rangs vers les poids supérieurs le signal numérique par rapport aux entrées d'un additionneur qui effectuera ensuite la somme, et à mettre des zéros sur les poids inférieurs. L'inversion du signe consiste à prendre le complément à 1 et ajouter 1.

On expliquera plus loin les raisons et les avantages de ce procédé, mais on peut déjà dire que la multiplication ainsi réalisée ne fait intervenir qu'un circuit très simple de décodage, d'aiguillages et d'un nombre très réduit d'additionneurs (un ou deux). Ce circuit peut fonctionner à haute cadence.

A partir de ce procédé, l'invention telle que définie par la revendication 7 propose donc un circuit de multiplication numérique, pour la multiplication périodique d'une valeur numérique SN par une forme d'onde périodique. Dans le cas d'une forme d'onde sinusoïdale, le procédé est caractérisé en ce qu'il comporte
- un moyen pour produire une phase numérique périodique Φ variant en dent de scie,
- un décodeur recevant la phase Φ et faisant correspondre à toute valeur 2iπ/N de la phase Φ, i étant un indice variant de 0 à N-1, une ou plusieurs puissances entières positives de 2 affectées d'un signe, dont la somme algébrique est un nombre Ai, le nombre Ai étant une valeur approchée de Ksin2iπ/N, K ayant la même valeur pour tous les Ai,
- des moyens d'aiguillage commandés par le décodeur lorsqu'il reçoit une phase 2iπ/N pour fournir un ou plusieurs signaux SNij à partir du signal SN, le signal SNij représentant le signal SN multiplié par une des puissances de deux affectées d'un signe utilisées dans la somme Ai,
- des moyens d'addition commandés par le décodeur et pouvant recevoir et additionner les signaux SNij fournis par les moyens d'aiguillage lorsque le décodeur reçoit une phase 2iπ/N,
- le circuit fournissant sur une sortie un signal SN.Ai qui représente la multiplication du signal par une forme d'onde qui est une valeur approchée de la forme d'onde sinusoïdale Ksin Φ.

N est de préférence supérieur ou égal à 12 et si la phase est codée en binaire sur p bits, N est égal à 2^{p}.

Au moins certaines des valeurs Ai sont obtenues par une somme de plusieurs puissances de deux différentes.

On choisit K de préférence suffisamment faible pour que le nombre de puissances de deux utilisées dans les additionneurs soit au maximum de quelques unités (par exemple 3 ou 4), et pour que le nombre d'additions réalisées pour une phase déterminée soit limité si possible à deux ou exceptionnellement à trois.

De préférence, K est égal à 13 ou 8, lorsque la phase est codée sur 4 bits et comporte N = 2⁴ échantillons dans une période. On verra plus loin les sommes Ai qui en résultent. K est de préférence égal à 7 lorsque la phase prend 12 valeurs sur une période. Dans un cas limite, pour 12 échantillons par période également, K peut être égal à 3, et dans ce cas, comme on le verra, la forme d'onde sinusoïdale est en fait approchée par une forme d'onde triangulaire.

On comprendra que par extension, l'invention peut s'appliquer à la multiplication d'un signal numérique par une forme d'onde périodique F(Φ) non sinusoïdale. Au lieu de chercher une approximation de la forme sinusoïdale KsinΦ par des sommes algébriques simples de puissances de deux, on cherchera des valeurs de K permettant d'approcher une fonction K.F(Φ) par des sommes algébriques simples de puissances de deux; on partira là encore d'une phase Φ en dent de scie périodique produite par un générateur numérique, avec N échantillons de phase Φi par période.

L'invention est tout particulièrement intéressante lorsque le nombre N de valeurs de phases différentes dans une période est plus élevé et lorsque le signal numérique SN est codé sur plusieurs bits.

D'autres caractéristiques et avantages de l'invention apparaîtront à la lecture de la description détaillée qui suit et qui est faite en référence aux dessins annexés dans lesquels :
- la figure 1 représente le principe du circuit de multiplication selon l'invention;
- la figure 2 représente un exemple simple de réalisation;
- la figure 3 représente une variante de réalisation d'une partie de la figure 2;
- la figure 4 représente le générateur de phase en dent de scie dans une application particulière;
- la figure 5 représente une application du multiplieur dans une boucle d'asservissement numérique de phase d'un récepteur de signaux de satellites.
On va d'abord illustrer par un exemple précis le raisonnement de principe qui mène aux schémas proposés par la présente invention.
On part d'un générateur numérique de phase délivrant une phase Φ variant périodiquement en dent de scie linéaire, et on cherche à obtenir le produit d'un signal numérique SN par une forme d'onde sinusoïdale de phase Φ.
L'exemple s'appuie sur le cas d'une phase codée sur p = 4 bits; N = 2⁴ = 16, c'est-à-dire que l'onde sinusoïdale est définie par 16 points espacés de π/8. La phase prend donc successivement des valeurs Φ = 2iπ/8, i étant un indice variant de 1 à N-1.
L'invention part de la remarque suivante : on peut écrire des tableaux qui font apparaître, pour chaque valeur de phase Φ, c'est-à-dire pour chaque indice i, une valeur approchée Ai d'une valeur KsinΦ telle que cette valeur Ai puisse être écrite sous forme d'une somme algébrique simple de puissances de deux. Le nombre K est identique pour tout le tableau : il représente en quelque sorte l'amplitude de l'onde sinusoïdale utilisée dans la multiplication.
Si on choisit par exemple K = 8, on peut écrire le tableau suivant pour les phases 0 à π/2 (les valeurs pour les autres phases s'en déduisent par les relations trigonométriques classiques, notamment en inversant les signes pour les phases de π à 2π) :

**Tableau 1**

| i | Φ | KsinΦ | approximation | somme Ai | erreur |
|---|---|---|---|---|---|
| 0 | 0 | 0 | 0 | 0 | 0 |
| 1 | π/8 | 3,061 | 3 | 2¹+2⁰ | +2% |
| 2 | π/4 | 5,657 | 6 | 2² + 2¹ | -6% |
| 3 | 3π/8 | 7,391 | 7 | 2³ - 2⁰ | +5,3% |
| 4 | π/2 | 8 | 8 | 2³ | 0 |

On remarque alors que plutôt que de multiplier le signal SN par une valeur sinΦ calculée à partir de Φ, il serait plus intéressant de multiplier SN par l'onde sinusoïdale KsinΦ, en utilisant les valeurs Ai comme valeurs approchées. Il suffit alors en effet
- de savoir multiplier la valeur SN par les nombres 2¹, 2², et 2³,
- et de savoir additionner algébriquement les nombres ainsi multipliés, soit entre eux, soit avec le signal SN ou le signal -SN.

Ces opérations peuvent se faire dans un circuit logique très simple comportant seulement un décodeur commandé par la phase numérique Φ, quelques circuits d'aiguillage, et un additionneur; les circuits d'aiguillage et l'additionneur sont commandés par le décodeur en fonction de la phase à un instant donné.

On obtient alors en sortie du circuit un signal composite représentant une valeur approchée du produit SN.KsinΦ qui est une valeur approchée du produit du signal SN par une forme d'onde sinusoïdale, le facteur K représentant une amplitude de cette forme d'onde.

Les erreurs mentionnées dans la dernière colonne du tableau 1 sont données à titre indicatif pour montrer à quelle précision il faut s'attendre. On notera que de toutes façons, le seul fait de numériser une onde sinusoïdale sur un nombre limité d'échantillons (16 échantillons par période par exemple) introduit une erreur largement supérieure à celle qui résulte de l'approximation ci-dessus, ce qui montre qu'on peut sans difficulté utiliser cette approximation.

On peut facilement trouver d'autres valeurs de K qui conviennent. Toutefois, plus K augmente, plus le nombre d'additionneurs en cascade risque d'être élevé, ce qui complique et ralentit le circuit.

Un exemple qui réalise un bon compromis entre une onde très proche d'une sinusoïde et un nombre limité d'étages d'addition est une valeur K = 13, toujours dans le cas d'un codage de phase sur 4 bits avec N = 2⁴ échantillons. Le tableau d'approximation par une somme de puissances de deux est le suivant :

**Tableau 2**

| i | Φ | Ksin Φ | approximation | Aᵢ | erreur |
|---|---|---|---|---|---|
| 0 | 0 | 0 | 0 | 0 | 0 |
| 1 | π/8 | 4,975 | 5 | 2² + 2⁰ | -0,5% |
| 2 | π/4 | 9,192 | 9 | 2³ + 2⁰ | +2,2% |
| 3 | 3π/8 | 12,01 | 12 | 2³ + 2² | +0,1% |
| 4 | π/2 | 13 | 13 | 2³ + 2² + 2⁰ | 0 |

Dans les exemples précédents, la phase est codée avec quatre bits. On peut trouver des valeurs de K qui permettent des approximations par des sommes de puissances de deux lorsque la phase est codée sur un nombre de bits supérieur ou inférieur, et également si la phase est codée sur un nombre d'échantillons qui n'est pas une puissance de 2.

Par exemple si la phase prend N = 12 valeurs par période, le générateur numérique de phase délivre des phases avec un code qui représente des incréments de π/6, et le décodeur qui contrôle aiguillages et additionneurs est conçu pour décoder les codes émis par le générateur. Dans ce cas, en prenant K à peu près égal à 3, on obtient une approximation triangulaire de l'onde sinusoïdale 3sinΦ. L'erreur peut être de 15%. Mais si K est égal à 7, toujours avec une phase codée sur 12 valeurs, l'approximation des sommes Ai peut être la suivante :

**Tableau 3**

| i | Φ | KsinΦ | Ai | décomposition |
|---|---|---|---|---|
| 0 | 0 | 0 | 0 | 0 |
| 1 | π/6 | 3,5 | 3 ou 4 | 2¹ + 2⁰ ou 2² |
| 2 | π/6 | 6,08 | 6 | 2² + 2¹ |
| 3 | π/2 | 7 | 7 | 2³ - 2⁰ |

Il n'y a qu'un étage d'additionneurs à mettre en oeuvre quelle que soit la valeur de la phase.

La mise en oeuvre de chacun des cas cités ci-dessus ou d'autres cas encore, est très simple.

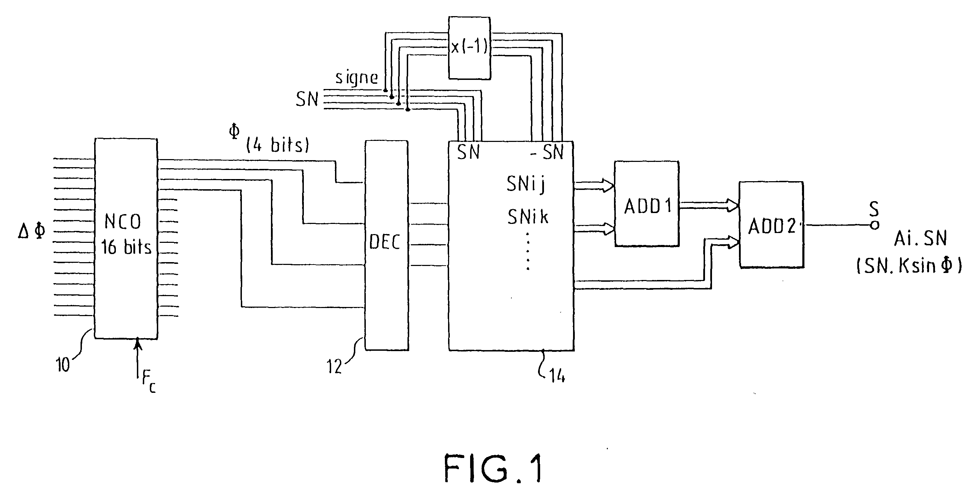

La figure 1 représente schématiquement l'organisation du circuit correspondant.

Le signal à multiplier par une forme d'onde sinusoïdale de phase Φ est le signal SN, codé par exemple sur 4 bits dont un bit de signe.

La phase numérique est fournie par un générateur numérique de phase (en anglais "NCO" pour "Numerically Controlled Oscillator"), désigné par la référence 10. La phase Φ utilisée est codée sur 4 bits. On reviendra plus loin sur la constitution de ce générateur dans des applications telles que le changement de fréquence numérique dans un récepteur GPS.

Pour le moment, on peut dire simplement que le principe d'un tel générateur est le suivant : il comporte un registre de mémoire, une entrée sur laquelle on applique sous forme numérique une valeur d'incrément de phase ΔΦ, un additionneur, et une horloge à fréquence fixe Fc. A chaque coup d'horloge, on additionne l'incrément au contenu du registre, et on met le résultat dans la mémoire. Lorsque le contenu de la mémoire atteint une valeur correspondant à 2π radians, on remet à zéro le registre. Le registre contient donc une valeur instantanée de phase, oscillant linéairement (et non pas sinusoïdalement) entre 0 et 2π. La sortie du générateur représente le contenu du registre, évoluant en dent de scie périodique.

La résolution du générateur peut être élevée, c'est-à-dire que le signal de sortie est fourni sur 16 bits par exemple, ou plus. Mais la plupart du temps la phase Φ utilisée pour la multiplication du signal SN peut être codée sur un plus petit nombre de bits, 4 dans cet exemple. Dans ce cas, on se contente de prendre les 4 bits de poids fort à la sortie du générateur et le signal SN sera multiplié par la forme d'onde sinusoïdale échantillonnée sur 16 instants par période.

Le circuit de la figure 1 comprend essentiellement un décodeur 12 qui reçoit les quatre bits de phase Φ et qui commande un circuit d'aiguillage 14. Le circuit d'aiguillage reçoit le signal numérique SN, ici codé par exemple sur quatre bits, qui doit être multiplié par la forme d'onde sinusoïdale; il reçoit éventuellement aussi l'opposé -SN de ce signal, surtout pour le cas où les sommes algébriques Ai comportent des soustractions. Le circuit d'aiguillage fournit, en fonction de l'état du décodeur 12 pour une phase donnée Φi, une ou plusieurs valeurs numériques SNij, SNik, ..., qui représentent chacune le produit de SN par une puissance entière positive de deux affectée d'un signe.

La multiplication de SN ou -SN par 2^{j} pour obtenir SNij peut être faite par un simple aiguillage. En effet, elle consiste à prendre le signal SN sur quatre fils (représentant les 3 bits de valeur de SN, de poids 2⁰, 2¹, 2², respectivement, et le bit de signe de SN de poids 2³), à affecter des poids 2^{j}, 2^{j+1}, 2^{j+2}, aux trois bits de valeur, un poids 2^{j+3} au bit de signe, et à rajouter j fils à zéro comme poids 2⁰ à 2^{j-1}.

Le circuit d'aiguillage a pour rôle d'effectuer ces décalages de poids des bits de SN et le rajout des bits de poids faible à zéro pour établir les signaux SNij et SNik nécessaires pour un échantillon i de phase.

Des additionneurs ADD1, ADD2, permettent d'ajouter deux à deux les signaux SNij, SNik,... selon le modèle des sommes Ai pour obtenir sur une sortie S la somme SNij + SNik + .... qui est égale au produit SN.Ai, c'est-à-dire l'approximation désirée de SN.K.sinΦ.

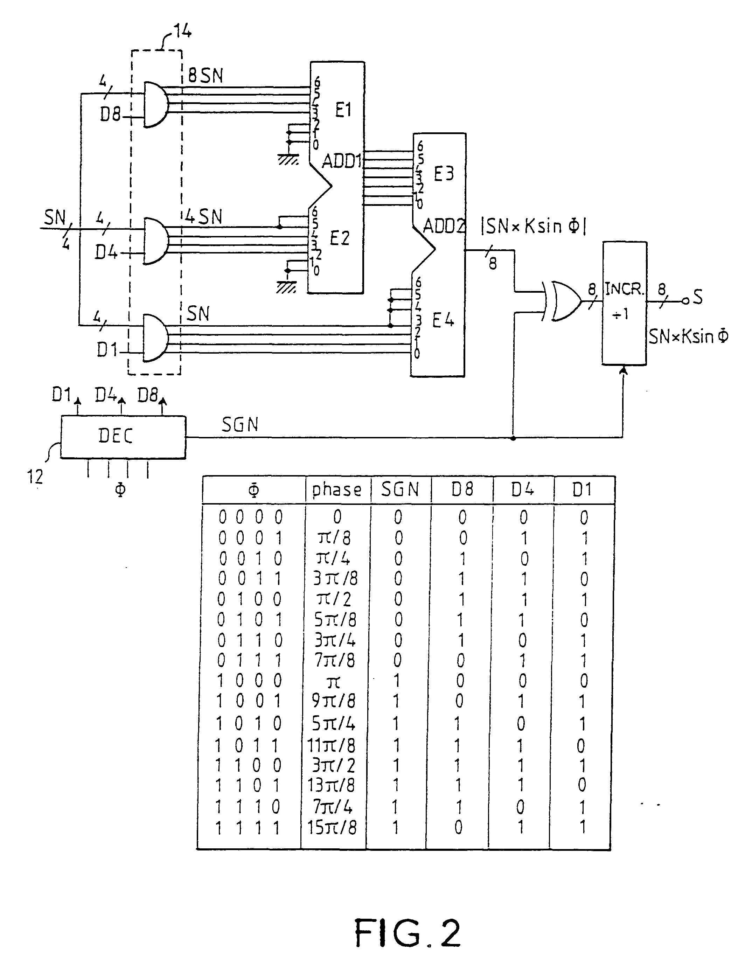

La figure 2 représente un exemple simple de réalisation qui correspond à l'approximation définie au tableau 2 (K = 13).

Conformément au tableau 2, il faut réaliser les calculs suivants en fonction de l'échantillon i de phase :

| | | |
|---|---|---|
| i = 0 | Φ = 0 | aiguillage d'un nombre 0 vers la sortie du circuit; |
| i = 1 | Φ = π/8 | aiguillage de SN.2² et SN vers les entrées d'un additionneur; |
| i = 2 | Φ = π/4 | aiguillage de SN.2³ et SN vers les entrées d'un additionneur |
| i = 3 | Φ = 3π/8 | aiguillage de SN.2³ et SN.2² vers les entrées d'un additionneur |
| i = 4 | Φ = π/2 | aiguillage de SN.2³ et SN.2² vers les entrées d'un premier additionneur, puis la sortie de l'additionneur et SN vers les entrées d'un deuxième additionneur. |
| i=5 | Φ=5π/8 | comme i = 3 |
| i=6 | Φ = 3π/4 | comme i = 2 |
| i=7 | Φ = 7π/8 | comme i = 1 |
| i=8 | Φ = π | comme i = 0 |
| i = 9 | jusqu'à i = 12 : | comme i = 1 à i = 4 respectivement, mais en prenant l'opposé du résultat obtenu ou en utilisant l'opposé (-SN) de SN; |
| i=13 | Φ = 13π/8 | comme i = 11 |
| i=14 | Φ = 7π/4 | comme i = 10 |
| i=15 | Φ = 15π/8 | comme i = 9 |

Deux additionneurs ADD1, ADD2 sont nécessaires puisque pour les phases π/2 et -π/2 trois termes sont à additionner.

Le décodeur 12 reçoit les quatre bits définissant la phase Φ. Le générateur de phase n'est pas représenté. Le décodeur possède quatre sorties, D1, D4, D8, représentant respectivement des commandes de multiplication de SN par 1, par 4 et par 8, et le signe SGN à affecter à ces multiplications en fonction de la phase. La table de décodage complète est représentée sur la figure 2 et correspond à l'approximation définie au tableau 2. La sortie D8 à 1 représente la nécessité d'effectuer une multiplication par 8; la sortie D4 à 1 représente la nécessité d'une multiplication par 4; la sortie D1 à 1 représente la nécessité d'utiliser le signal SN non multiplié, et enfin la sortie SGN à 1 représente la nécessité d'inverser le signe du résultat.

Le circuit d'aiguillage 14 comporte simplement trois groupes de portes ET. Chaque groupe est représenté sous forme d'une seule porte comportant une entrée pour le signal SN et une entrée de commande permettant de laisser passer ou non le signal SN selon le niveau logique appliqué à l'entrée de commande.

Une première porte est commandée par le signal D8 et applique, si D8 est à 1, le signal SN sur une première entrée E1 d'un premier additionneur ADD1, mais en décalant de 3 bits les poids des chiffres de SN afin d'effectuer la multiplication par 8 : les poids des chiffres de SN sont appliqués aux entrées de poids 3 à 6 de l'additionneur, les entrées de poids 0 à 2 étant mises à zéro. Si D8 est à zéro l'entrée E1 reçoit 0. Dans ces conditions, on peut considérer que cette première porte fournit soit 0 (pour les échantillons de phase 0, 1, 7, 8, 9, 15) soit une valeur 8 SN (pour les échantillons 2, 3, 4, 5, 6, 10, 11, 12, 13, 14).

Une deuxième porte est commandée par D4 et applique, si D4 est à 1, le signal SN sur les poids 2 à 5 (multiplication par 4) de la deuxième entrée E2 de l'additionneur ADD1. Les entrées de poids 0 et 1 sont mises à zéro. L'entrée de poids 6 reçoit le bit de signe du signal SN (bit de signe reçu par ailleurs sur l'entrée de poids 5). L'entrée E2 reçoit 0 si D4 est à 0.

L'additionneur ADD1 fournit donc soit SNx4 si D4 est à 1 et D8 à 0, soit SNx8 si D8 est à 1 et D4 à zéro, soit 8xSN + 4xSN donc 12xSN si D4 et D8 sont à 1, soit enfin 0 si D4 et D8 sont à zéro.

La sortie de l'additionneur A1 est transmise à la première entrée E3 d'un deuxième additionneur ADD2.

Une troisième porte est commandée par le signal D1 et fournit SN si D1 est à 1 ou zéro si D1 est à 0. La sortie de cette porte est reçue par la deuxième entrée E4 de l'additionneur ADD2, les poids du nombre SN correspondant aux poids 0 à 3 de cette entrée, ce qui correspond à une absence de multiplication de SN. Le bit de signe (poids 3) de SN est recopié sur les entrées de poids 4 à 6.

La sortie de l'additionneur ADD2 fournit 0 ou SN ou 5xSN ou 9xSN ou 12xSN ou 13xSN en fonction de la table de décodage.

Le bit de signe SGN du décodeur 12 (signe 0 pour les phases 0 à 7π/8, signe 1 pour les autres) est appliqué à un circuit de changement de signe qui reçoit la sortie de l'additionneur ADD2. Ce circuit de changement de signe comprend, en logique de complément à 1 une porte OU-Exclusif suivie d'un incrémenteur qui ajoute une unité de poids le plus faible à la valeur de sortie de la porte OU-Exclusif. La sortie S de l'incrémenteur fournit l'approximation de SN.KsinΦ, ici sur 8 bits avec un bit de signe.

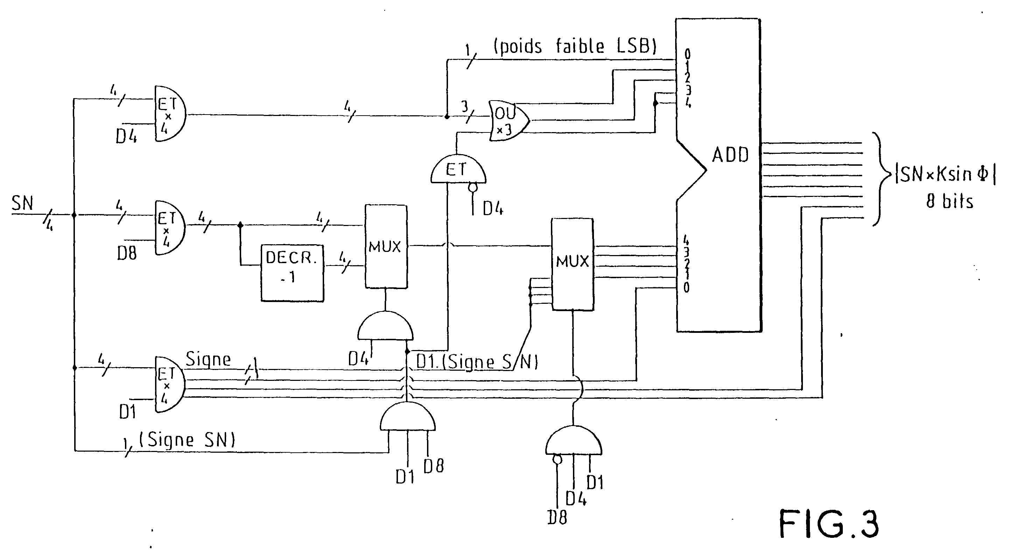

Cette réalisation simple comprend trois portes d'aiguillage, deux additionneurs et le circuit de changement de signe. On peut réaliser la même fonction d'aiguillage et d'addition avec un seul additionneur et des portes supplémentaires, pour obtenir un circuit plus rapide et moins encombrant. La figure 3 représente un exemple de réalisation avec un seul additionneur, avec deux fois 5 entrées et non deux fois 7 comme à la figure 2, permettant d'exécuter exactement la même fonction que les portes ET et les deux additionneurs de la figure 2 à partir des sorties D1, D4, D8 du décodeur 12.

L'exemple de la figure 3 est donné seulement pour montrer que des manières très différentes d'exécuter la même fonction peuvent être imaginées.

Dans certaines applications, dont le récepteur de signaux satellites est un exemple, la phase Φ n'est pas prélevée directement sur les sorties de poids fort du générateur numérique de phase. Mais on additionne la sortie complète du générateur à un bruit de phase pseudo-aléatoire, pour obtenir une phase volontairement bruitée, avec un niveau de bruit inférieur au bit de poids le plus faible qui sera utilisé dans la multiplication du signal SN. L'introduction de ce bruit est destinée à supprimer des raies parasites périodiques dans le spectre du signal SN.sinΦ, raies qui sont dues à la troncature de la phase sur 4 bits dans le schéma de la figure 1. Dans le cas d'un récepteur de signaux de satellites, ces raies sont causes de risques de perte d'asservissement du signal reçu et recalage sur des fréquences voisines.

Ainsi, typiquement, si le générateur fournit une phase sur 16 bits, on lui ajoute un bruit pseudo-aléatoire de 12 bits, pour obtenir une phase bruitée que l'on tronque en n'utilisant que les 4 bits de poids fort. Le spectre du signal KsinΦ en sortie du multiplieur ne comporte plus les raies parasites gênantes.

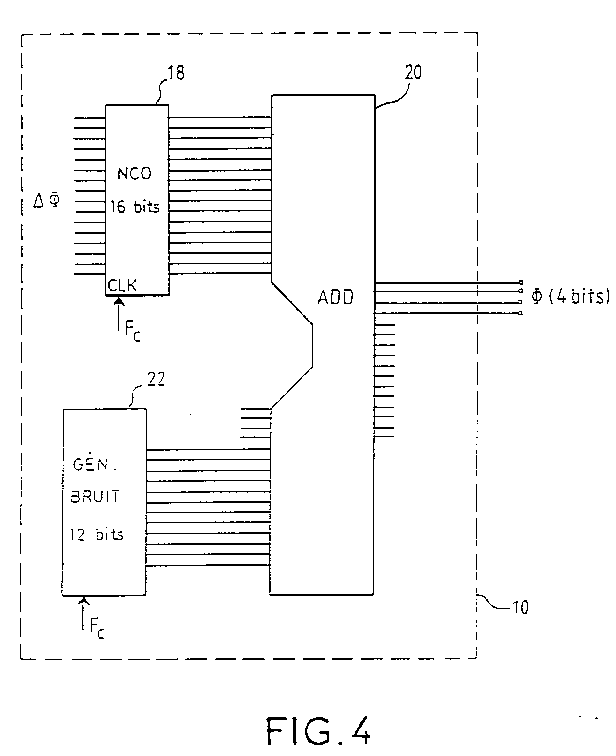

Le générateur 10 de la figure 1 est alors constitué comme cela est représenté sur la figure 4. L'oscillateur contrôlé NCO 18 comporte une entrée d'horloge à fréquence Fc et une entrée numérique de commande de fréquence et de phase. Cette entrée définit l'incrément de phase rajouté sur les sorties à chaque coup d'horloge. Les 16 bits de sortie de l'oscillateur NCO sont additionnés dans un additionneur 20 aux 12 bits de bruit issus d'un générateur de séquence pseudo-aléatoire. Les 12 bits de bruit sont appliqués avec des poids correspondant aux 12 bits de poids faible de l'additionneur. Le générateur de bruit est par exemple un générateur produisant des séquences pseudo-aléatoires de longueur 2²⁰ bits.

La sortie de l'additionneur est tronquée sur les 4 bits de poids fort pour fournir la phase Φ.

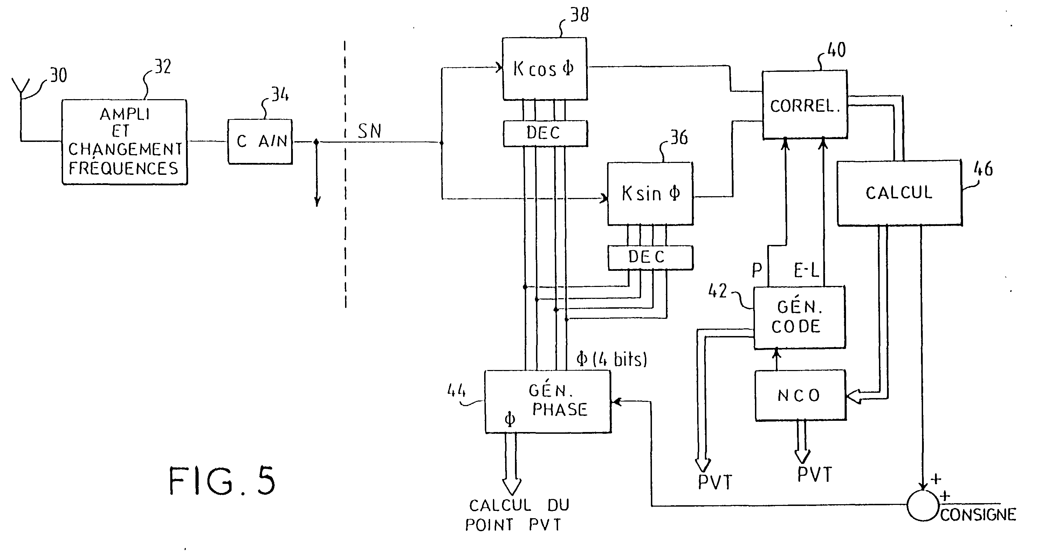

La figure 5 représente une application du multiplieur dans une boucle d'asservissement en fréquence et en phase, à l'intérieur d'un récepteur de signaux satellites GPS ou GLONASS.

Le récepteur comporte une antenne 30 pour la réception de signaux radiofréquence, suivie de circuits 32 d'amplification et de transposition de fréquence, puis d'un convertisseur analogique-numérique 34. Le signal de sortie du convertisseur est un signal numérique représentant des échantillons d'une porteuse (à fréquence transposée, par exemple 20 MHz), modulée en phase par un code pseudo-aléatoire dont la fréquence de transitions est de 1,023 MHz et dont la durée est de 1 milliseconde.

Le signal numérisé est appliqué à une chaîne de traitement numérique de signal qui comporte en général plusieurs canaux parallèles identiques pour la réception de signaux de plusieurs satellites simultanément. Un seul canal est représenté sur la figure 5.

Le signal numérisé SN subit une transposition numérique de fréquence, pour extraire de la porteuse la composante de modulation. Cette transposition est faite par multiplication du signal numérisé SN par une onde sinusoïdale de fréquence égale à la fréquence porteuse transposée.

Cette multiplication est faite conformément aux explications données précédemment, c'est-à-dire par production d'une phase Φ et multiplication du signal SN par des sommes Ai de puissances de deux approchant la valeur de KsinΦ.

En général, on souhaite avoir à la fois une voie "en phase" et une voie "en quadrature de phase", et pour cela on multiplie le signal SN non seulement par KsinΦ (multiplieur 36), mais aussi par KcosΦ (multiplieur 38). On comprendra que la réalisation du circuit de multiplication par KcosΦ se déduit immédiatement du circuit de multiplication par KsinΦ.

Les voies sinus et cosinus, qui comportent la modulation de phase d'origine, mais à une fréquence transposée par la multiplication, sont appliquées à un corrélateur 40 dont la fonction est d'indiquer le degré de synchronisation entre le code pseudo-aléatoire contenu dans les voies sinus et cosinus et le code pseudo-aléatoire engendré localement par un générateur 42 de code local. Le code local produit par le générateur est identique au code attendu du satellite.

La fréquence de l'onde sinusoïdale est une fréquence correspondant théoriquement à la valeur de la fréquence porteuse transposée du signal numérique SN. La phase Φ de cette onde est produite par un générateur 44 qui peut être construit conformément à la figure 4. Ce générateur est asservi pour garder une fréquence et une phase correspondant à celles de la porteuse transposée reçue du satellite. Ceci permet que le signal appliqué au corrélateur prenne en compte tout décalage de fréquence, du par exemple à une effet Doppler, entre la fréquence théoriquement reçue du satellite et la fréquence réellement reçue.

Le générateur de phase contrôlée 44 reçoit donc un signal de commande qui est la somme d'un signal de consigne de fréquence et d'un signal d'erreur de phase et de fréquence porteuse qui est produit par calcul (circuit de calcul 46) à partir des signaux fournis par le corrélateur 40.

Parallèlement, le générateur de code pseudo-aléatoire local 42 est piloté par un oscillateur dont la fréquence et la phase sont commandés numériquement en fonction de calculs faits à partir de la sortie du corrélateur 40, pour asservir le code local sur le code reçu.

Les signaux d'asservissement produits par le circuit de calcul 46, ainsi que l'état du générateur de code 42 et du générateur de phase 44, sont utilisés comme information pour la détermination de la position du récepteur.

On a ainsi décrit une application particulière du circuit selon l'invention.

## Revendications

1. Procédé de multiplication d'un signal numérique SN par une forme d'onde périodique F(Φ), utilisant une phase numérique Φ variant périodiquement en dent de scie et prenant des valeurs successives Φi au cours d'une période, i étant un indice de 0 à N-1, où N représente le nombre d'échantillons de phase utilisés pendant une période, caractérisé en ce qu'il comprend les opérations consistant à:
- appliquer cette phase à l'entrée d'un décodeur (12) utilisant comme fonction de décodage un tableau de N valeurs approchées entières Ai de N nombres KF(Φi), K étant un nombre quelconque identique pour tous les indices i, les valeurs entières approchées Ai étant des sommes algébriques d'une ou plusieurs puissances entières positives de 2 affectées d'un signe, au moins certaines valeurs Ai étant des sommes de plusieurs puissances de deux différentes,
- multiplier le signal SN, pour chaque indice i correspondant à une phase Φi, par les diverses puissances de 2 qui composent le nombre Ai, sous la commande du décodeur,
- et effectuer les sommes algébriques des signaux ainsi multipliés pour composer une valeur numérique qui est le produit de SN par la valeur approchée Ai.

2. Procédé selon la revendication 1, caractérisé en ce que la multiplication par des puissances de 2 est effectuée par un circuit d'aiguillage (14) commandé par le décodeur (12).

3. Procédé selon l'une des revendications 1 et 2, caractérisé en ce que la forme d'onde du signal périodique est sinusoïdale, la fonction F(Φi) étant égale à sinΦi et les valeurs successives de Φi au cours d'une période étant 2iπ/N, i variant de 0 à N-1.

4. Procédé selon la revendication 3, caractérisé en ce que la fonction de décodage utilise les valeurs Ai suivantes, i étant un indice de 0 à 15 : A0 = 0; A1 = 4+1; A2 = 8 + 1; A3= 8+4; A4 = 8 + 4 + 1, les valeurs A5 à A8 étant les mêmes que A4 à A0 respectivement, et les valeurs A9 à A15 étant l'opposé des valeurs A1 à A7 respectivement.

5. Procédé selon la revendication 3, caractérisé en ce que la fonction de décodage utilise les valeurs suivantes, i étant un indice de 0 à 15 : A0 = 0; A1 = 2 + 1; A2 = 4 + 2; A3 = 8 - 1; A4 = 8, les valeurs A5 à A8 étant les mêmes que A4 à A0 respectivement, et les valeurs A9 à A15 étant l'opposé des valeurs A1 à A7 respectivement.

6. Procédé selon la revendication 3, caractérisé en ce que la fonction de décodage utilise les valeurs Ai suivantes, i étant in indice variant de 0 à 12 : :A0 = 0; A1 = 3 ou 4; A2 = 6; A3 = 7; les valeurs A4 à A6 étant les mêmes que A2 à A0 respectivement, et les valeurs A7 à A11 étant l'opposé des valeurs A1 à A5 respectivement.

7. Circuit de multiplication numérique, pour la multiplication périodique d'une valeur numérique SN par une forme d'onde périodique F(Φ), utilisant une phase numérique Φ variant périodiquement en dent de scie et prenant des valeurs successives Φi au cours d'une période, i étant un indice de 0 à N-1, où N représente le nombre d'échantillons de phase utilisés pendant une période, caractérisé en ce qu'il comporte :
- un moyen (10) pour produire une phase numérique périodique Φ variant en dent de scie,
- un décodeur (12) recevant la phase Φ et faisant correspondre à toute valeur Φi de la phase Φ, la somme Ai d'une ou plusieurs puissances entières positives de 2 affectées d'un signe, i étant un indice variant de 0 à N-1 , chaque nombre Ai étant égal à une valeur approchée de KF(Φi), K ayant la même valeur pour tous les Ai, et au moins certaines valeurs de Ai étant constituées par des sommes de plusieurs puissances de deux différentes,
- des moyens d'aiguillage (14) commandés par décodeur lorsqu'il reçoit une phase Φi pour fournir un ou plusieurs signaux SNij à partir du signal SN, le signal SNij étant le signal SN multiplié par une des puissances de deux affectée d'un signe utilisée dans la somme Ai,
- des moyens d'addition commandés par le décodeur et pouvant recevoir et additionner les signaux SNij fournis par les moyens d'aiguillage lorsque le décodeur reçoit une phase Φi,
- le circuit fournissant sur une sortie (S) un signal SN.Ai qui représente la multiplication du signal par une forme d'onde qui est une valeur approchée de la forme d'onde périodique K(Φ).

8. Circuit selon la revendication 7, caractérisé en ce que la forme d'onde périodique est sinusoïdale, la fonction F(Φi) étant égale à sinΦi et les valeurs successives de Φi au cours d'une période étant 2iπ/N, i variant de 0 à N-1.

9. Circuit selon la revendication 8, caractérisé en ce que les moyens d'aiguillage fournissent, sous la commande du décodeur, les produits de SN par les puissances de deux correspondant aux sommes Ai suivantes, i étant un indice de 0 à 15 : A0 = 0; A1 = 4+1; A2=8+1; A3= 8+4; A4=8+4+1, les valeurs A5 à A8 étant les mêmes que A4 à A0 respectivement, et les valeurs A9 à A15 étant l'opposé des valeurs A1 à A7 respectivement.

10. Circuit selon la revendication 9, caractérisé en ce qu'il comporte un premier additionneur pour effectuer les sommes A0 à A3, A5 à A11, A13 à A15, et une partie de chacune des sommes A4 et A12, et un deuxième additionneur pour effectuer le reste de la somme A4 et de la somme A12.

11. Circuit selon la revendication 8, caractérisé en ce que les moyens d'aiguillage fournissent, sous la commande du décodeur, les produits de SN par les puissances de deux correspondant aux sommes Ai suivantes, i étant un indice de 0 à 15 : A0 = 0; A1 = 2 + 1; A2 = 4 + 2; A3 = 8 - 1 ; A4 = 8, les valeurs A5 à A8 étant les mêmes que A4 à A0 respectivement, et les valeurs A9 à A15 étant l'opposé des valeurs A1 à A7 respectivement, et les moyens d'addition comportant un seul additionneur.

12. Circuit selon la revendication 8, caractérisé en ce que les moyens d'aiguillage fournissent, sous la commande du décodeur, les produits de SN par les puissances de deux correspondant aux sommes Ai suivantes, i étant in indice variant de 0 à 12 : A0 = 0; A1 = 3 ou 4; A2 = 6; A3 = 7; les valeurs A4 à A6 étant les mêmes que A2 à A0 respectivement, et les valeurs A7 à A11 étant l'opposé des valeurs A1 à A5 respectivement, et les moyens d'addition utilisant un seul additionneur.

13. Application du circuit de multiplication selon l'une des revendications 8 à 12 à un récepteur de signaux de positionnement par satellite, caractérisé en ce que le récepteur comporte une boucle d'asservissement numérique recevant un signal SN reçu d'un satellite, transposé en fréquence puis numérisé, la boucle produisant un signal d'erreur de phase appliqué à un générateur numérique de phase, le générateur produisant ladite phase périodique numérique Φ variant en dent de scie linéaire, la sortie du circuit de multiplication constituant un signal numérique transposé en fréquence numériquement par multiplication du signal SN par une forme d'onde sinusoïdale, et des moyens de corrélation et de calcul étant prévus dans la boucle d'asservissement pour produire le signal d'erreur à partir du signal ainsi multiplié.

14. Application du circuit de multiplication selon la revendication 13, caractérisée en ce que le générateur numérique de phase comprend un oscillateur à commande numérique de phase, un moyen pour additionner un bruit pseudo-aléatoire à la sortie de l'oscillateur, et un moyen pour tronquer la phase résultant de cette addition et l'appliquer au décodeur.

## Patentansprüche

1. Verfahren zur Multiplikation eines digitalen Signals SN mit einer periodischen Wellenform F(Φ), die eine digitale Phase Φ verwendet, die periodisch in Form eines Sägezahns variiert und nacheinander Werte Φi im Lauf einer Periode annimmt, wobei i ein Index von 0 bis N-1 ist und N die Anzahl der in einer Periode verwendeten Phasentastproben darstellt, dadurch gekennzeichnet, daß es die folgenden Verfahrensschritte enthält:
- diese Phase gelangt an den Eingang eines Dekoders (12), der als Dekodierfunktion eine Tabelle von ganzzahligen Näherungswerten Ai bezüglich von N Werten K·F(Φi) verwendet, wobei K eine beliebige und für alle Indices i identische Zahl ist und die ganzzahligen Näherungswerte Ai die algebraischen Summen von einer oder mehreren ganzzahligen Zweierpotenzen einschließlich eines Vorzeichens sind und mindestens bestimmte Werte von Ai Summen mehrerer unterschiedlicher Zweierpotenzen sind;
- das Signal SN wird für jeden Index i entsprechend einer Phase Φi unter Steuerung durch den Dekoder mit den verschiedenen Zweierpotenzen multipliziert, aus denen die Zahl Ai besteht;
- die algebraischen Summen der so multiplizierten Signale werden gebildet, um einen digitalen Wert zu erzeugen, der das Produkt von SN mit dem Näherungswert Ai ist.

2. Verfahren nach Anspruch 1, dadurch gekennzeichnet, daß die Multiplikation mit den Zweierpotenzen in einer Schaltlogik (14) erfolgt, die vom Dekoder (12) gesteuert wird.

3. Verfahren nach einem der Ansprüche 1 und 2, dadurch gekennzeichnet, daß die Wellenform des periodischen Signals eine Sinusform ist, also die Funktion F(Φi) der Funktion sin(Φi) gleicht, und daß die aufeinanderfolgenden Werte von Φi im Verlauf einer Periode den Wert 2iπ/N besitzen und i von 0 bis N-1 variiert.

4. Verfahren nach Anspruch 3, dadurch gekennzeichnet, daß die Dekodierfunktion die folgenden Werte Ai verwendet, wobei der Index i von 0 bis 15 variiert: A0 = 0; A1 = 4+1; A2 = 8+1; A3 = 8+4; A4 = 8+4+1, während die Werte für A5 bis A8 denjenigen für A3 bis A0 gleichen und die Werte für A9 bis A15 die Werte von A1 bis A7, jedoch mit umgekehrten Vorzeichen annehmen.

5. Verfahren nach Anspruch 3, dadurch gekennzeichnet, daß die Dekodierfunktion die folgenden Werte Ai verwendet, wobei der Index i von 0 bis 15 variiert: A0 = 0; A1 = 2+1; A2 = 4+2; A3 = 8-1; A4 = 8, während die Werte für A5 bis A8 denjenigen für A3 bis A0 gleichen und die Werte für A9 bis A15 die Werte von A1 bis A7, jedoch mit umgekehrten Vorzeichen annehmen.

6. Verfahren nach Anspruch 3, dadurch gekennzeichnet, daß die Dekodierfunktion die folgenden Werte Ai verwendet, wobei der Index i von 0 bis 12 variiert: A0 = 0; A1 = 3 oder 4; A2 = 6; A3 = 7, während die Werte für A4 bis A6 denjenigen für A2 bis A0 gleichen und die Werte für A7 bis A11 die Werte von A1 bis A5, jedoch mit umgekehrten Vorzeichen annehmen.

7. Schaltung zur digitalen Multiplikation für die periodische Multiplikation eines digitalen Werts SN mit einer periodischen Welle F(Φ), die eine digitale Phase Φ verwendet, welche periodisch und sägezahnförmig variiert und aufeinanderfolgende Werte Φi im Verlauf einer Periode annimmt, wobei i ein Index von 0 bis N-1 ist und N die Anzahl von Phasentastproben darstellt, die während einer Periode verwendet werden, dadurch gekennzeichnet, daß sie aufweist:
- ein Mittel (10) zur Erzeugung einer periodischen digitalen Phase Φ, die sägezahnförmig variiert,
- einen Dekoder (12), der die Phase Φ empfängt und jedem Wert Φi der Phase Φ die Summe Ai von einer oder mehreren positiven ganzzahligen Zweierpotenzen zusammen mit einem Vorzeichen zuordnet, wobei i ein von 0 bis N-1 variierender Index ist und jede Zahl Ai einem Näherungswert von K·F(Φi) gleicht und wobei K für alle Werte von Ai derselbe ist und mindestens bestimmte Werte von Ai von Summen mehrerer unterschiedlicher Zweierpotenzen gebildet werden,
- Schaltlogikkreise (14), die vom Dekoder gesteuert werden, wenn dieser eine Phase Φi empfängt, um eines oder mehrere Signale SNij ausgehend vom Signal SN zu liefern, wobei SNij das Signal SN multipliziert mit einer der in der Summe Ai verwendeten Zweierpotenzen plus Vorzeichen ist,
- Addiermittel, die vom Dekoder gesteuert werden und die von den Schaltlogikkreisen gelieferten Signale SNij empfangen und addieren können, wenn der Dekoder eine Phase Φi empfängt,
wobei die Schaltung an einem Ausgang (S) ein Signal SN·Ai entsprechend dem Produkt des Signals mit einer Wellenform liefert, die einen Näherungswert der periodischen Wellenform K·F(Φ) ist.

8. Schaltung nach Anspruch 7, dadurch gekennzeichnet, daß die periodische Wellenform eine Sinusform ist, das heißt daß die Funktion F(Φi) der Funktion sin(Φi) gleicht und daß die im Verlauf einer Periode aufeinanderfolgenden Werte von Φi die Werte 2iπ/N mit 0≤i≤N-1 sind.

9. Schaltung nach Anspruch 8, dadurch gekennzeichnet, daß die Schaltlogikkreise unter Steuerung durch den Dekoder die Produkte von SN mit den Zweierpotenzen entsprechend den folgenden Summen Ai liefern, wobei i ein Index von 0 bis 15 ist: A0 = 0; A1 = 4+1; A2 = 8+1; A3 = 8+4; A4 = 8+4+1, während die Werte für A5 bis A8 denen für A3 bis A0 gleichen und die Werte für A9 bis A15 die Werte von A1 bis A7, jedoch mit umgekehrten Vorzeichen annehmen.

10. Schaltung nach Anspruch 9, dadurch gekennzeichnet, daß sie einen ersten Addierer zur Bildung der Summen A0 bis A3, A5 bis A11, A13 bis A15 und eines Teils der Summen A4 und A12 sowie einen zweiten Addierer zur Bildung des Rests der Summen A4 und A12 aufweisen.

11. Schaltung nach Anspruch 8, dadurch gekennzeichnet, daß die Schaltlogikkreise unter Steuerung durch den Dekoder die Produkte von SN mit den Zweierpotenzen entsprechend den folgenden Summen Ai liefern, wobei i ein Index von 0 bis 15 ist: A0 = 0; A1 = 2+1; A2 = 4+2; A3 = 8-1; A4 = 8, während die Werte für A5 bis A8 denen für A3 bis A0 gleichen und die Werte für A9 bis A15 die Werte von A1 bis A7, jedoch mit umgekehrten Vorzeichen annehmen, wobei die Addiermittel einen einzigen Addierer enthalten.

12. Schaltung nach Anspruch 8, dadurch gekennzeichnet, daß die Schaltlogikkreise unter Steuerung durch den Dekoder die Produkte von SN mit den Zweierpotenzen entsprechend den folgenden Summen Ai liefern, wobei i ein Index von 0 bis 12 ist: A0 = 0; A1 = 3 oder 4; A2 = 6; A3 = 7, während die Werte für A4 bis A6 denen für A2 bis A0 gleichen und die Werte für A7 bis A11 die Werte von A1 bis A5, jedoch mit umgekehrten Vorzeichen annehmen, wobei die Addiermittel einen einzigen Addierer enthalten.

13. Anwendung der Multiplizierschaltung nach einem der Ansprüche 8 bis 12 auf einen Empfänger für Satelliten-Positioniersignale, dadurch gekennzeichnet, daß der Empfänger eine digitale Regelschleife enthält, die ein von einem Satelliten kommendes und frequenzmäßig umgesetztes und anschließend digitalisiertes Signal SN empfängt und ein Phasenfehlersignal erzeugt und an einen digitalen Phasengenerator anlegt, der die sägezahnförmig variierende digitale periodische Phase Φ erzeugt, wobei der Ausgang der Multiplizierschaltung ein digitales Signal bildet, das durch Multiplikation des Signals SN mit einer sinusförmigen Welle auf digitale Weise frequenzmäßig umgesetzt ist, und wobei Korrelations- und Rechenmittel in der Regelschleife vorgesehen sind, die das Fehlersignal ausgehend von dem so multiplizierten Signal erzeugen.

14. Anwendung der Multiplizierschaltung nach Anspruch 13, dadurch gekennzeichnet, daß der digitale Phasengenerator einen in seiner Phase digital steuerbaren Oszillator, ein Mittel zur Addition eines Pseudozufallsrauschens am Ausgang des Oszillators und ein Mittel aufweist, um die aus dieser Addition resultierende Phase zu beschneiden und an den Dekoder anzulegen.

## Claims

1. Method for multiplying a digital signal SN by a periodic waveform F(Φ), using a digital phase Φ varying periodically as a sawtooth and taking successive values Φi in the course of a period, i being an index from 0 to N-1, where N represents the number of phase samples used during a period, characterized in that it comprises the operations consisting in:
- applying this phase to the input of a decoder (12) using as decoding function a table of N approximate integer values Ai of N numbers KF(Φi), K being any number that is identical for all the indices i, the approximate integer values Ai being algebraic sums of one or more positive integer powers of 2 allocated a sign, at least some values Ai being sums of several different powers of two,
- multiplying the signal SN, for each index i corresponding to a phase Φi, by the various powers of 2 from which the number Ai is constructed, under the control of the decoder,
- and effecting the algebraic sums of the signals thus multiplied so as to construct a digital value which is the product of SN times the approximate value Ai.

2. Method according to Claim 1, characterized in that the multiplication by powers of 2 is performed by a routing circuit (14) controlled by the decoder (12).

3. Method according to one of Claims 1 and 2, characterized in that the waveform of the periodic signal is sinusoidal, the function F(Φi) being equal to sinΦi and the successive values of Φi in the course of a period being 2iπ/N, i varying from 0 to N-1.

4. Method according to Claim 3, characterized in that the decoding function uses the following values Ai, i being an index from 0 to 15: A0 = 0; A1 = 4+1; A2 = 8+1; A3 = 8+4; A4 = 8+4+1, the values A5 to A8 being the same as A4 to A0 respectively, and the values A9 to A15 being the opposite of the values A1 to A7 respectively.

5. Method according to Claim 3, characterized in that the decoding function uses the following values, i being an index from 0 to 15: A0 = 0; A1 = 2+1; A2 = 4+2; A3 = 8-1; A4 = 8, the values A5 to A8 being the same as A4 to A0 respectively, and the values A9 to A15 being the opposite of the values A1 to A7 respectively.

6. Method according to Claim 3, characterized in that the decoding function uses the following values Ai, i being an index varying from 0 to 12: A0 = 0; A1 = 3 or 4; A2 = 6; A3 = 7; the values A4 to A6 being the same as A2 to A0 respectively, and the values A7 to A11 being the opposite of the values A1 to A5 respectively.

7. Digital multiplication circuit, for the periodic multiplication of a digital value SN by a periodic waveform F(Φ), using a digital phase Φ varying periodically as a sawtooth and taking successive values Φi in the course of a period, i being an index from 0 to N-1, where N represents the number of phase samples used during a period, characterized in that it comprises:
- a means (10) for producing a periodic digital phase Φ varying as a sawtooth,
- a decoder (12) receiving the phase Φ and matching up every value Φi of the phase Φ with the sum Ai of one or more positive integer powers of 2 allocated a sign, i being an index varying from 0 to N-1, each number Ai being equal to an approximate value of KF(Φi), K having the same value for all the Ai, and at least some of the values of Ai being constituted by sums of different powers of two,
- routing means (14) controlled by the decoder when it receives a phase Φi so as to provide one or more signals SNij from the signal SN, the signal SNij being the signal SN multiplied by one of the powers of two allocated a sign used in the sum Ai,
- addition means controlled by the decoder and able to receive and add together the signals SNij provided by the routing means when the decoder receives a phase Φi,
- the circuit providing on an output (S) a signal SN.Ai which represents the multiplication of the signal by a waveform which is an approximate value of the periodic waveform K(Φ).

8. Circuit according to Claim 7, characterized in that the periodic waveform is sinusoidal, the function F(Φi) being equal to sinΦi and the successive values of Φi in the course of a period being 2iπ/N, i varying from 0 to N-1.

9. Circuit according to Claim 8, characterized in that the routing means provide, under the control of the decoder, the products of SN times the powers of two corresponding to the following sums Ai, i being an index from 0 to 15: A0 = 0; A1 = 4+1; A2 = 8+1; A3 = 8+4; A4 = 8+4+1, the values A5 to A8 being the same as A4 to A0 respectively, and the values A9 to A15 being the opposite of the values A1 to A7 respectively.

10. Circuit according to Claim 9, characterized in that it comprises a first adder for effecting the sums A0 to A3, A5 to A11, A13 to A15, and a portion of each of the sums A4 and A12, and a second adder for effecting the remainder of the sum A4 and of the sum A12.

11. Circuit according to Claim 8, characterized in that the routing means provide, under the control of the decoder, the products of SN times the powers of two corresponding to the following sums Ai, i being an index from 0 to 15: A0 = 0; A1 = 2+1; A2 = 4+2; A3 = 8-1; A4 = 8, the values A5 to A8 being the same as A4 to A0 respectively, and the values A9 to A15 being the opposite of the values A1 to A7 respectively, and the addition means comprising a single adder.

12. Circuit according to Claim 8, characterized in that the routing means provide, under the control of the decoder, the products of SN times the powers of two corresponding to the following sums Ai, i being an index varying from 0 to 12: A0 = 0; A1 = 3 or 4; A2 = 6; A3 = 7; the values A4 to A6 being the same as A2 to A0 respectively, and the values A7 to A11 being the opposite of the values A1 to A5 respectively, and the addition means using a single adder.

13. Application of the multiplication circuit according to one of Claims 8 to 12 to a receiver of satellite positioning signals, characterized in that the receiver comprises a digital servocontrol loop receiving a signal SN received from a satellite, frequency-transposed and then digitized, the loop producing a phase error signal applied to a digital phase generator, the generator producing the said digital periodic phase Φ varying as a linear sawtooth, the output of the multiplication circuit constituting a digital signal frequency-transposed digitally by multiplying the signal SN by a sinusoidal waveform, and means of correlation and of calculation being provided in the servocontrol loop so as to produce the error signal from the signal thus multiplied.

14. Application of the multiplication circuit according to Claim 13, characterized in that the digital phase generator comprises a digital phase control oscillator, a means for adding pseudo-random noise to the output from the oscillator, and a means for truncating the phase resulting from this addition and applying it to the decoder.
